# EUROPEAN PATENT SPECIFICATION

(11) **EP 0 573 293 B1**
(45) Date of publication and mention of the grant of the patent: **05.09.2001**
(21) Application number: 93304314.3
(22) Date of filing: 03.06.1993
(51) Int. Cl.: H04N 5/272

(54) **Video mixing apparatus**
Vorrichtung zur Überblendung von Videosignalen
Dispositif pour enchainer des signaux vidéo

(30) Priority: 03.06.1992 JP 14303992
(43) Date of publication of application: 08.12.1993
(73) Proprietor: PIONEER ELECTRONIC CORPORATION, Meguro-ku, Tokyo (JP); HUDSON SOFT CO., LTD., Sapporo-shi, Hokkaido 062-8622 (JP)
(72) Inventor: Okada, Setsuo, Sapporo-city, Hokkaido (JP); Takeya, Noriyoshi, c/o Pioneer Tokorozawa Plant, Tokorozawa-City, Saitama (JP); Okamoto, Manabu, c/o Pioneer Tokorozawa Plant, Tokorozawa-City, Saitama (JP); Nagase, Yoshinou, c/o Pioneer Tokorozawa Plant, Tokorozawa-City, Saitama (JP); Yoshimi, Takashi, c/o Pioneer Tokorozawa Plant, Tokorozawa-City, Saitama (JP); Yamazaki, Hitoshi, c/o Pioneer Tokorozawa Plant, Tokorozawa-City, Saitama (JP); Matsuura, Hiroyasu, c/o Pioneer Tokorozawa Plant, Tokorozawa-City, Saitama (JP); Miyazaki, Masakazu, c/o Pioneer Tokorozawa Plant, Tokorozawa-City, Saitama (JP); Furuta, Yoshiki, c/o Pioneer Tokorozawa Plant, Tokorozawa-City, Saitama (JP); Sui, Masahiro, c/o Pioneer Tokorozawa Plant, Tokorozawa-City, Saitama (JP); Matoba, Hirofumi, c/o Pioneer Tokorozawa Plant, Tokorozawa-City, Saitama (JP)
(74) Representative: Tomlinson, Kerry John

(56) References cited:
- EP-A- 0 292 239
- EP-A- 0 330 732
- US-A- 5 027 212

## Description

The present invention relates to a video mixing apparatus for mixing a playback video signal obtained by playing a recording medium and a graphics video signal obtained based on a data processing.

An apparatus has been devised for mixing a playback video signal indicative of a moving image or a still image that is obtained by playing a recording medium such as a video disk or the like and a graphics video signal indicative of a graphics video image based on graphics data which is obtained as a subcode signal. Such an apparatus is disclosed, for example, in Japanese Patent Application Kokai No. 1-256071 (which has an equivalent EP-A-0336041). In the video mixing apparatus disclosed in this document, the playback video signal and the graphics video signal are adjusted individually through a variable resistor and added together, and resistance values of such variable resistors are changed in accordance with a manual operation, so that a mixing ratio of the playback video signal and the graphics video signal are arbitrarily determined.

In such a conventional video mixing apparatus, however, a graphics video image and a playback video image are mixed at the same mixing ratio on one whole screen. That is, the above apparatus doesn't have a construction such that a part of one image frame of a graphics video image and the other portion thereof are mixed at different mixing ratios into a playback video image or a construction such that, on the contrary, a part of one image frame of a playback video image and the other portion thereof are mixed at different mixing ratios into a graphics video image. This means that in a television game apparatus using a graphics video image, it is impossible to form various effective video images by mixing a graphics video image of every video image such as background, person, characters, or the like and a playback video image.

US-A-5027212 describes a computer based video and graphics display system. The preamble to claim 1 is based on that document. It is, therefore, an object of the present invention to provide a video mixing apparatus which can mix a graphics video image and a playback video image at a plurality of mixing ratios in one image frame.

According to the present invention, there is provided a video mixing apparatus for mixing a playback video signal obtained from a recording medium and a graphics video signal obtained on the basis of the result of the process of data processing means, comprising:
fade data generating means for generating fade data indicative of a mixing ratio between at least one line of said playback video signal and said graphics video signal;
holding means for holding the fade data generated from said fade data generating means and for outputting the fade data; and
mixing means for individually adjusting levels of the playback video signal and the graphics video signal in accordance with the fade data outputted from said holding means and for additively mixing the adjusted signals; characterised in that:
   said graphics video signal has a plurality of screens, and said fade data generating means generates fade data indicative of a mixing ratio between said playback video signal and each of said screens of said graphics video signal in accordance with a predetermined order,
   said holding means outputs the fade data synchronously with a horizontal sync signal (HSYNC); and in that said apparatus further comprises:
      data generating means for generating pixel by pixel one of a plurality of image data corresponding to said plurality of screens of said graphics video signal in accordance with a priority signal representing a priority order in the reproduction of said screens, said data generating means further providing an additional data bit for each of said generated image data for indicating to which one of said graphics video signal screens the generated image data belongs;
      means for converting the image data outputted from the data generating means into the graphics video signal; and
      judging means, receiving said image data generated by said data generating means, for judging to which one of the graphics video signal screens the image data outputted from the data generating means belongs on the basis of said additional data bit and the image data,
      wherein said fade data generating means generates the fade data for each of said screens of said graphics video signal, and said holding means holds the fade data for each of said screens of said graphic video signal, and either one of the plurality of fade data held is output to said mixing means according to the result of the discrimination by said judging means or each of the plurality of fade data held is inputted to individual level adjusting means provided in said mixing means wherein said graphics video signal is supplied according to the result of the discrimination by said judging means to one of said individual level adjusting means.

In the video mixing apparatus of the invention, the fade data indicative of the mixing ratio of at least one line of the playback video signal and the graphics video signal is sequentially generated in accordance with a predetermined order. The fade data is held in the holding means and is outputted from the holding means synchronously with a horizontal sync signal. In accordance with the fade data supplied from the holding means, the levels of the playback video signal and graphics video signal are individually adjusted and the adjusted signals are added together. The playback video signal and the graphics video signal are, consequently, mixed at the mixing ratio set every line of one image frame.

Embodiments of the present invention will be described in detail hereinbelow by way of example only and with reference to the drawings.

### BRIEF DESCRIPTION OF THE DRAWINGS

Fig. 1 is a block diagram showing an embodiment of the present invention;
Figs. 2A through 2C are diagrams showing operation waveforms in portions of the apparatus of Fig. 1;
Figs. 3A through 3D are diagrams showing operation waveforms in portions of the apparatus of Fig. 1;
Figs. 4A through 4G are diagrams showing operating states in portions of the apparatus of Fig. 1;
Figs. 5A through 5C are diagrams showing operating states in portions of the apparatus of Fig. 1;
Fig. 6 is a block diagram showing another embodiment of the invention; and
Fig. 7 is a block diagram showing another embodiment of the invention.

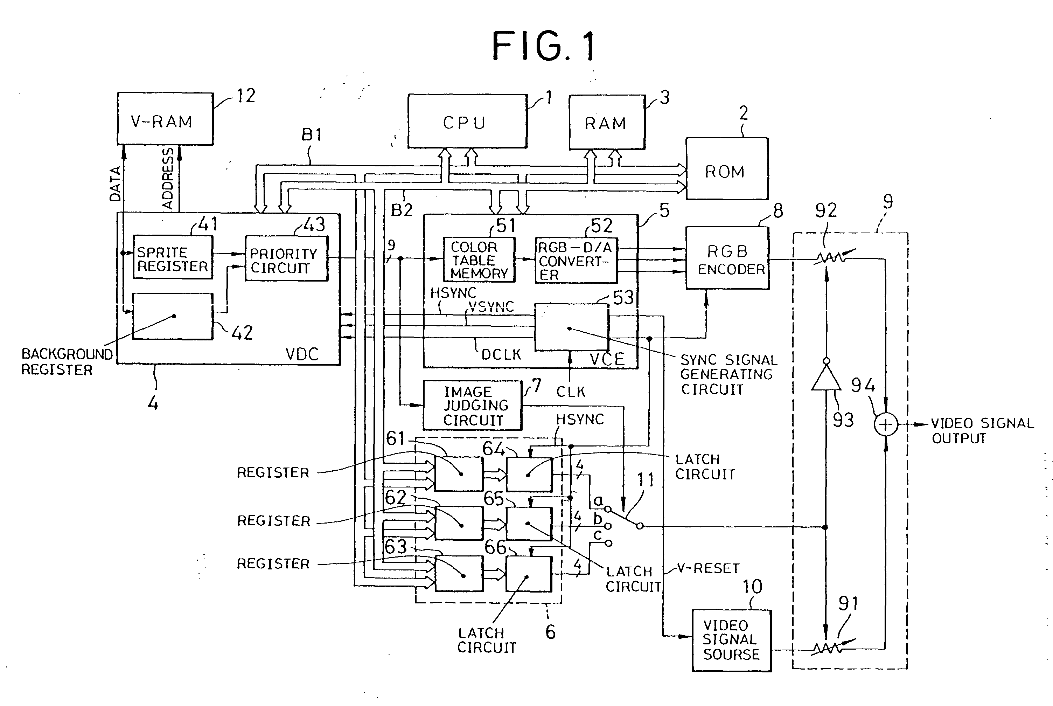

Fig. 1 shows a video apparatus in which an embodiment of a video mixing apparatus according to the invention is applied. In such a video apparatus, a common data bus B1 and a common address bus B2 are provided. A CPU 1, a ROM 2, a RAM 3, a VDC (Video Display Controller) 4, a VCE (Video Control Encoder) 5, and a data selector 6 are connected to the buses B1 and B2. The CPU 1 controls the whole video apparatus and outputs commands and data to the buses B1 and B2 in accordance with a program which has previously been written in the ROM 2. The ROM 2 is detachably provided in the video apparatus. Not only one or a plurality of programs but also data such as character data, fade data, and the like which are necessary for those programs have previously been written in the ROM 2. The data read out from the ROM 2 or the processed data is temporarily stored into the RAM 3. The VDC 4 writes data into a V-RAM (Video RAM) 12 or reads out the necessary image data from the V-RAM 12 and outputs the read-out image data in accordance with a command from the CPU 1.

A sprite register 41, a background register 42, and a priority circuit 43 are provided in the VDC 4. Image data of eight bits indicative of a character video image such as a person, characters, or the like is read out from the V-RAM 12 and held in the sprite register 41 dot by dot. Image data of eight bits indicative of a background video image is read out from the V-RAM 12 and held in the background register 42 dot by dot. The priority circuit 43 selectively outputs either one of the image data held in the registers 41 and 42 in accordance with the priority indicated by a priority signal which is supplied from the CPU 1. The image data which is held in the sprite register 41 is the data of a screen A of a character image among the graphics video images comprising three screens. The image data held in the background register 42 is the data of either one of two screens B and C with respect to the background image. As shown in Table 1, all of image data VDO to VD7 of the screen C are equal to 0. The image data VDO to VD7 of the screens A and B are different as shown by reference character "X and are not all equal to O and are not constant. A most significant bit VD8 is set to "1" for the screen A of the character video image and is set to "0" for the screens B and C of the background image. The most significant bit VD8 is added at the time of output of data in each of the registers 41 and 42. The image data is, consequently, supplied from the VDC 4 to the VCE 5 and an image judging circuit 7 as 9-bit data. A specific construction of the VDC 4 is described in Japanese Patent Application Kokai No. 64-78319 (publication number JP1078319 and having patent family members GB-A-2246935 and GB-A-2210238).

**TABLE 1**

| screen | VD8 | VD7 | VD6 | VD5 | VD4 | VD3 | VD2 | VD1 | VD0 |
|---|---|---|---|---|---|---|---|---|---|
| A | 1 | X | X | X | X | X | X | X | X |
| B | 0 | X | X | X | X | X | X | X | X |
| C | 0 | 0 | 0 | 0 | 0 | 0 | 0 | 0 | 0 |

The VCE 5 has a color table memory 51, an RGB-D/A converting circuit 52, and a sync signal generating circuit 53. The color table memory 51 is constructed by a ROM forming a color table in which RGB data of, for example, 256 colors indicative of color tones corresponding to the image data have been stored. The RGB data corresponding to the image data outputted from the VDC 4 is supplied from the memory 51 to the RGB-D/A converter circuit 52. The RGB-D/A converter circuit 52 converts the RGB data into the analog RGB signal. The sync signal generating circuit 53 is constructed by a frequency divider and divides a reference clock signal CLK and generates a horizontal sync signal HSYNC, a vertical sync signal VSYNC, and a dot clock signal DCLK of one pixel unit. Those signals are supplied as timing signals to the VDC 4. The horizontal sync signal HSYNC is supplied from the sync signal generating circuit 53 to the data selector 6 and RGB encoder 8. A reset signal VRESET according to the vertical sync signal is further supplied to a video signal source 10.

The analog RGB signal outputted from the RGB-D/A converter circuit 52 is supplied to an RGB encoder 8. The RGB encoder 8 converts the analog RGB signal into the composite video signal in response to the horizontal sync signal HSYNC. The video signal after completion of the conversion is supplied as a graphics video signal to a mixing circuit 9. The mixing circuit 9 comprises: an attenuator 91 to attenuate the playback video signal from the video signal source 10 such as a video disk player or the like; an attenuator 92 to attenuate the graphics video signal from the encoder 8; an inverter 93 to invert the fade data which has been relayed by a change-over switch 11, which will be explained hereinbelow; and an adder 94 to add output video signals of the attenuators 91 and 92. The degree of attenuation of the attenuator 91 changes in accordance with the fade data supplied. The degree of attenuation of the attenuator 92 changes in accordance with the data inverted by the inverter 93. The output signals of the attenuators 91 and 92 are supplied to a CRT display (not shown) through the adder 94. Each of the attenuators 91 and 92 is, for example, constructed by: a VCA (Voltage Controlled Amplifier) provided in a video signal line; and a D/A converter for converting the fade data or the like into an analog signal and supplying it as a control voltage to the VCA.

The data selector 6 has three registers 61 through 63 corresponding to the screens A to C and latch circuits 64 through 66 connected to the registers 61 through 63. Fade data and Address data are supplied from the CPU 1 to the registers 61 through 63 through the data bus B1 and address bus B2. The fade data is loaded into the register designated by the address data. The fade data loaded in the registers 61 through 63 is further held into the corresponding latch circuits 64 through 66 in response to the horizontal sync signal HSYNC. The change-over switch 11 is connected to the outputs of the latch circuits 64 through 66. The switch 11 relays and transfers the fade data held in one of the latch circuits 64 through 66 to the mixing circuit 9.

The image judging circuit 7 discriminates to which one of the screens A, B, and C the 9-bit image data that is supplied corresponds. For example, the image judging circuit 7 is constructed by an OR circuit to get the OR of the bits VDO to VD7 among the image data VDO to VD8. Two bits, the output of the OR circuit and VD8 are outputted as an output signal. This output signal is used as a control signal of the change-over switch 11.

In such a construction, the CPU 1 first reads out the color data indicative of the display color and the character data of a person or the like from the ROM 2 in accordance with the program data derived from the ROM 2. The CPU 1 supplies the read-out color data and character data to the VDC 4 together with the address data. The VDC 4 allows the data to be stored at the memory location in the V-RAM 12 that is designated by the corresponding address data for every data supplied.

In the VDC 4, the pattern number and sprite color stored in a sprite attribute table buffer (not shown) are read out and the color data and character data are read out from the memory locations in the V-RAM 12 on the basis of the read-out pattern number and sprite color and loaded as image data of one dot into the sprite register 41. The address data is obtained from the raster position, the color data and character data in the V-RAM 12 corresponding to the address data are obtained, and further the data is derived from the address location that is decided by the character data and is loaded together with the color data into the background register 42 as image data of one dot. The image data VDO to VD7 held in the sprite register 41 and background register 42 are updated, for instance, every dot clock and changed at any time. Since the practical operation about the data transfer between the VDC 4 and the V-RAM 12 has been disclosed in Japanese Patent Application Kokai No. 64-78319 (publication number JP1078319 and having patent Family members GB-A-2246935 and GB-A-2210238) mentioned above, a detailed description of the operation is omitted here.

The CPU 1 generates a priority signal every dot clock signal DCLK in accordance with the program stored in the ROM 2. The priority circuit 43 selectively outputs either one of the image data held in the registers 41 and 42 in accordance with the priority shown by the priority signal. Since the VD8 of one bit which has been predetermined for the screens A, B, and C is added to the image data as mentioned above when the data is outputted from each of the registers 41 and 42, the selected image data is outputted from the priority circuit 43 as nine bits of VDO to VD8.

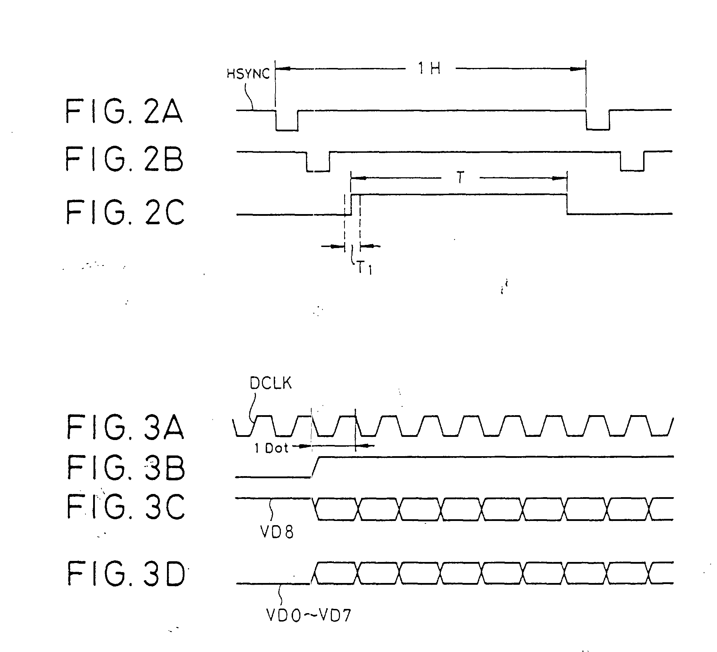

In the case where the horizontal sync signal HSYNC is generated as shown in Fig. 2A, Fig. 2B shows the generation of a color burst signal. Fig. 2C shows a period of time T which is displayed on the screen of the CRT display. Fig. 3 shows a change in image data of every dot in the portion of the period T1 in Fig. 2. Specifically speaking, Fig. 3A shows the dot clock signal DCLK. Fig. 3B shows a period of time which is displayed on the screen of the CRT display in a manner similar to Fig. 2C. Fig. 3C shows a change in most significant bit VD8 of the image data that is outputted from the priority circuit 43. Fig. 3D shows changes in bits VDO to VD7 of the image data which is outputted from the priority circuit 43. That is, new image data VDO to VD8 are outputted every dot from the priority circuit 43.

The image data outputted from the VDC 4 is converted into the corresponding RGB data in accordance with the color table in the color table memory 51 and is further converted into the analog RGB signal by the RGB-D/A converter circuit 52 subsequently. The RGB signal is supplied as a graphics video signal to the mixing circuit 9 through the RGB encoder 8. The screens A, B, and C are discriminated in the image judging circuit 7 in accordance with the image data outputted from the VDC 4. The result of the discrimination is supplied to the change-over switch 11 as a switch change-over signal. When the image data indicates the screen A, the switch 11 is switched to a selection position a. When the image data indicates the screen B, the switch 11 is switched to a selection position b. When the image data indicates the screen C, the switch 11 is switched to a selection position c.

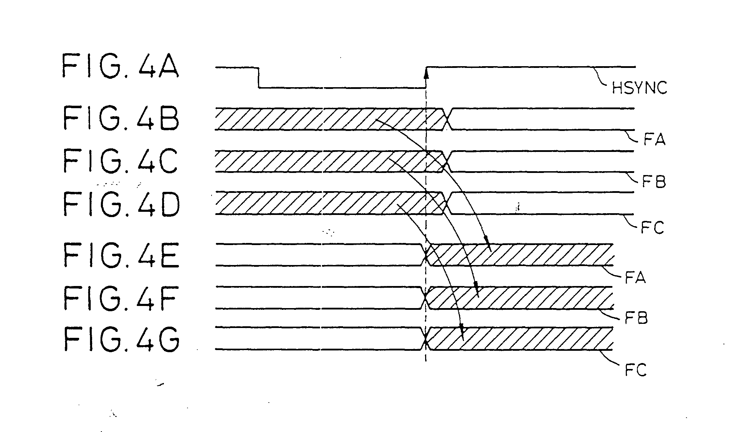

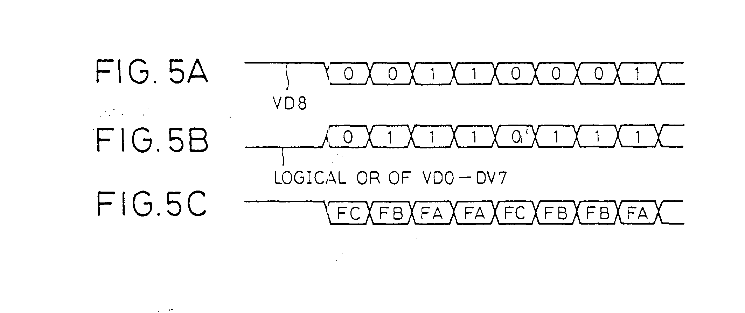

On the other hand, the CPU 1 properly supplies the fade data and address data to the data selector 6 in accordance with the program stored in the ROM 2. Therefore, the fade data is loaded into one of the registers 61 through 63 that is designated by the address data and is updated by the supplied fade data in the case where the fade data has already been loaded into the register. As shown in Figs. 4B through 4D, fade data FA through FC are ordinarily supplied to the registers 61 through 63 in one H period of time after the leading edge of the horizontal sync signal HSYNC (Fig. 4A) and the contents of the data held in those registers are changed. Since the horizontal sync signal HSYNC is supplied to the latch circuits 64 through 66, the latch circuits 64 through 66 receive the fade data FA to FC held in the corresponding registers 61 through 63 in response to the leading edge of the horizontal sync signal HSYNC and update and hold them in response to the leading edge of the horizontal sync signal HSYNC as shown in Figs. 4E to 4G. Therefore, the data shown in the hatched portions in Figs. 4B through 4D is shifted as data in the hatched portions in Figs. 4E through 4G as shown by the arrows In the case where, for example, the most significant bit VD8 of the image data outputted from the VDC 4 changes every dot by the above updating operation as shown in Fig. 5A, or, in the case where the OR outputs of the bits VDO to VD7 are changed every dot as shown in Fig. 5B, the fade data is changed to either one of FA to FC as shown in Fig. 5C. When there is no change in fade data held in the corresponding registers 61 through 63, the contents of the fade data newly held in the latch circuits 64 through 66 are not changed.

One of the three fade data FA to FC is selected by the switch 11 and supplied to the mixing circuit 9. In addition to the graphics video signal and one of the fade data FA to FC, the playback video signal is supplied from the video signal source 10 to the mixing circuit 9. In the mixing circuit 9, the attenuation degree of the attenuator 91 to attenuate the playback video signal is changed in accordance with the selected fade data. The attenuation degree of the attenuator 92 to attenuate the graphics video signal is changed by the inverter 93 in accordance with the inverted data. Now, assuming that the fade data consists of four bits, so long as the fade data indicates "0000" as an opaque state, the attenuation degree of the attenuator 92 is minimum and the attenuation degree of the attenuator 91 is maximum. The graphics video signal is outputted as it is from the mixing circuit 9. When the fade data indicates "1111" as a completely transparent state, the attenuation degree of the attenuator 92 is maximum and the attenuation degree of the attenuator 91 is minimum. The playback video signal is outputted as it is from the mixing circuit 9. The larger the transparency degree of the fade data, the higher the attenuation degree of the attenuator 92 and the lower attenuation degree of the attenuator 91. The larger the transparency degree, the higher the overlap degree of the playback video image to the graphics image. The output signals of the attenuators 91 and 92 are supplied to the CRT display through the adder 94. For example, the video image such that the graphics image is added to the playback video image such as a moving image or the like is displayed on the screen of the CRT display. In such a video image, the degree of mixing of the playback video image and the graphics image changes, at most, every one line in the screen. Further, since one of the screens A, B, and C is selected every dot of the image frame with respect to the graphics image in one line of the image frame, it is possible to set so that the fade data differs every dot. In such a case, the mixing degree of the playback video image and the graphics image changes every dot.

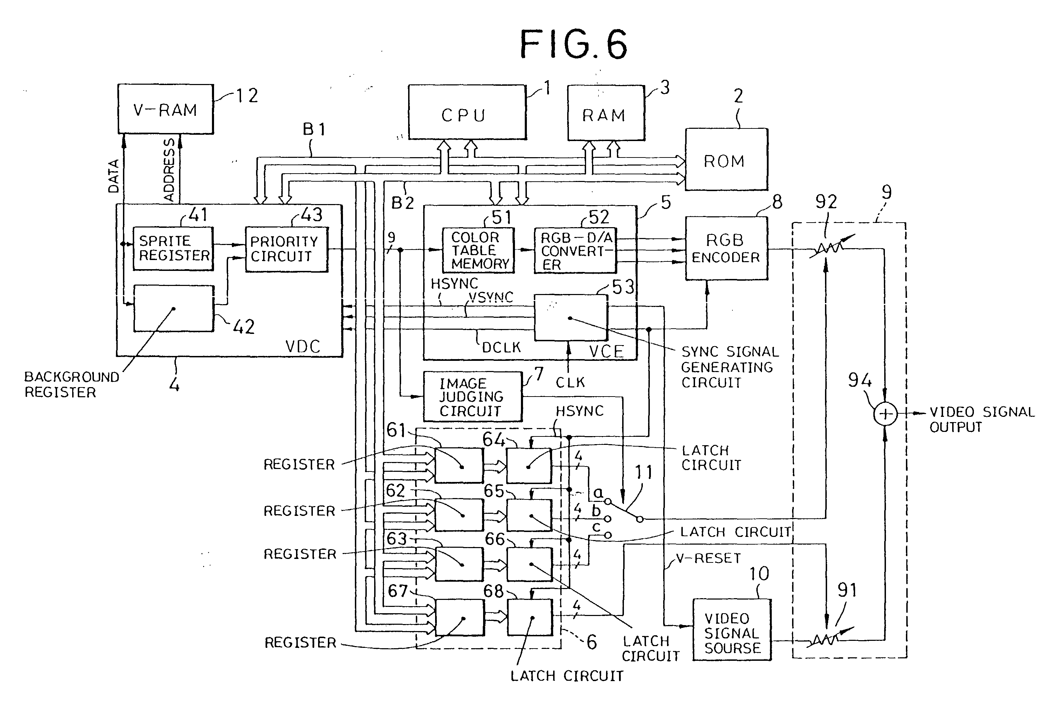

Fig. 6 shows another embodiment of the invention. In this video mixing apparatus, a register 67 and a latch circuit 68 are provided for the data selector 6 in addition to the registers 61 through 63 and the latch circuits 64 through 66. The registers 61 through 63 and the latch circuits 64 through 66 are used to hold the fade data for the graphics video signal. The register 67 and the latch circuit 68 are used to hold the fade data for the playback video signal. The relayed output by the switch 11 is directly supplied to the attenuator 92. An output of the latch circuit 68 is directly supplied to the attenuator 91. Therefore, the inverter 93 in the apparatus of Fig. 1 is not provided for the mixing circuit 9. The CPU 1 properly supplies the fade data and address data to the data selector 6 in accordance with the program stored in the ROM 2. The fade data, therefore, is held in one of the registers 61 through 63 and 67 that is designated by the address data. When the fade data has already been loaded into such a register, it is updated by the fade data supplied. Each of the latch circuits 64 through 66 and 68 receives the fade data held in the corresponding one of the registers 61 through 63 and 67 and updates and holds the received fade data in response to the leading edge of the horizontal sync signal HSYNC. The other operations are similar to those of the apparatus shown in Fig. 1. The fade data supplied to the attenuator 91 and the fade data supplied to the attenuator 92 at the same point in time are in an inverted relation similarly to those in the apparatus shown in Fig. 1. Operations are previously executed so that an inverted relation is attained between the respective fade data which are supplied to the data selector 6, at the processing state of the CPU 1 according to the program stored in the ROM 2.

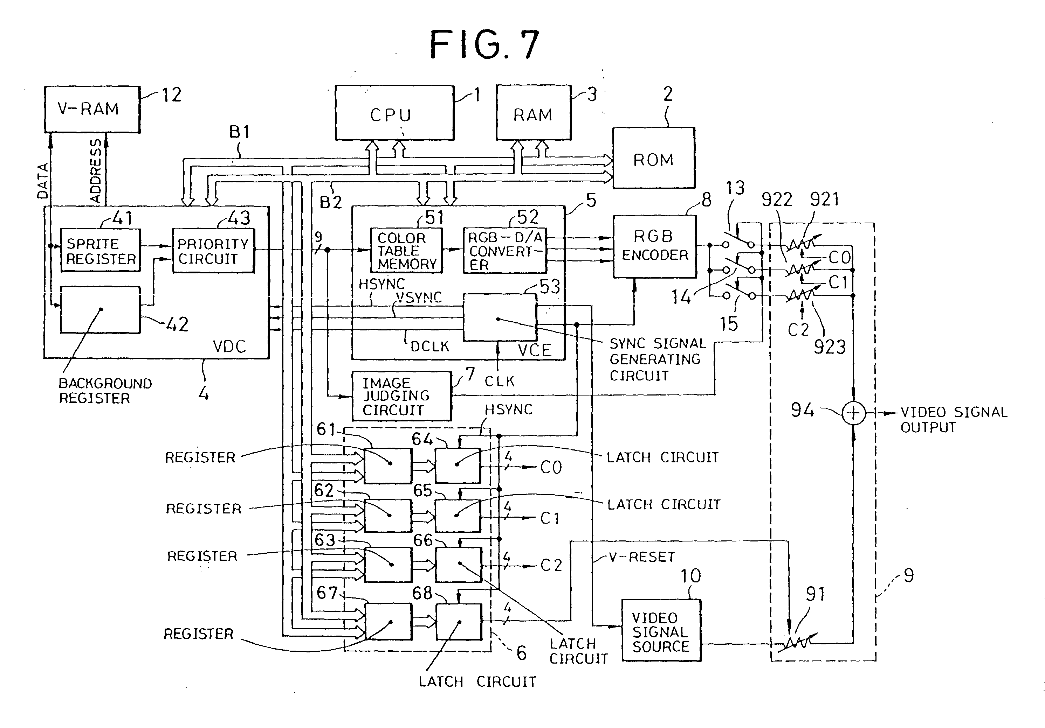

Fig. 7 shows still another embodiment of the invention. In this embodiment, three on/off switches 13 through 15 are connected in parallel to an output of the RGB encoder 8. One of the on/off switches 13 through 15 is turned on in response to the output signal of the image judging circuit 7. One of attenuators 921, 922, and 923 is connected to each output of the on/off switches 13 through 15. The fade data held in the corresponding one of the latch circuits 64 through 66 of the data selector 6 is supplied to each of the attenuators 921 through 923. The graphics video signal which is supplied through the switch in the on state among the on/off switches 13 through 15 is, therefore, attenuated by a corresponding one of the attenuators 921 through 923. The playback video signal is attenuated by the attenuator 91 in accordance with the fade data held in the latch circuit 68. Those attenuated video signals are mixed by the adder 94 and the mixed signal is outputted. The other constructions are similar to those shown in Fig. 6.

According to the video mixing apparatus of the present invention as mentioned above, the fade data indicative of a mixing ratio of at least one line of the playback video signal and the graphics video signal is sequentially generated in accordance with a predetermined order. The fade data is held in the holding means and is outputted from the holding means synchronously with the horizontal sync signal. In accordance with the fade data outputted from the holding means, the levels of the playback video signal and graphics video signal are individually adjusted and the adjusted signals are added. Due to this, the playback video signal and the graphics video signal are mixed at the mixture ratio set every line of one image frame. In the video apparatus using the graphics video image, accordingly, various effective video images can be easily formed by mixing the graphics video image of every video image such as background, person, characters, or the like and the playback video image.

## Claims

1. A video mixing apparatus for mixing a playback video signal obtained from a recording medium (10) and a graphics video signal obtained on the basis of the result of the process of data processing means (1,4,12), comprising:
fade data generating means (1,6) for generating fade data indicative of a mixing ratio between at least one line of said playback video signal and said graphics video signal;
holding means (64,65,66,68) for holding the fade data generated from said fade data generating means and for outputting the fade data; and
mixing means (91,92,93,94) for individually adjusting levels of the playback video signal and the graphics video signal in accordance with the fade data outputted from said holding means and for additively mixing the adjusted signals; **characterised in that**:
said graphics video signal has a plurality of screens, and said fade data generating means generates fade data indicative of a mixing ratio between said playback video signal and each of said screens of said graphics video signal in accordance with a predetermined order,
said holding means outputs the fade data synchronously with a horizontal sync signal (HSYNC); and in that said apparatus further comprises:
data generating means (4,12) for generating pixel by pixel one of a plurality of image data corresponding to said plurality of screens of said graphics video signal in accordance with a priority signal representing a priority order in the reproduction of said screens, said data generating means further providing an additional data bit for each of said generated image data for indicating to which one of said graphics video signal screens the generated image data belongs;
means (5) for converting the image data outputted from the data generating means into the graphics video signal; and
judging means (7), receiving said image data generated by said data generating means, for judging to which one of the graphics video signal screens the image data outputted from the data generating means belongs on the basis of said additional data bit and the image data,
wherein said fade data generating means generates the fade data for each of said screens of said graphics video signal, and said holding means holds the fade data for each of said screens of said graphic video signal, and either one of the plurality of fade data held is output to said mixing means, according to the result of the discrimination by said judging means or each of the plurality of fade data held is inputted to individual level adjusting means (921, 922, 923) provided in said mixing means wherein said graphics video signal is supplied according to the result of the discrimination by said judging means to one of said individual level adjusting means.

2. The video mixing apparatus of claim 1, wherein said judging means discriminates said one screen by evaluating the bit arrangement of said image data.

## Patentansprüche

1. Ein Video-Mischgerät zum Mischen eines Wiedergabe-Videosignals, das von einem Aufzeichungsmedium (10) abgerufen wurde, und eines graphischen Videosignals, das auf der Grundlage des Ergebnisses der Abarbeitung von Datenverarbeitungsmitteln (1, 4, 12) erhalten wurde, enthaltend;
Einblenddaten-Generierungsmittel (1, 6) zum Generieren von Einblenddaten, die hinweisend auf ein Mischverhältnis zwischen mindestens einer Zeile des Wiedergabe-Videosignals und des Graphik-Videosignals sind;
Speichermittel (64, 65, 66, 68) zum Abspeichern der vom Einblenddaten-Generierungsmittel generierten Einblenddaten und zum Ausgeben der Einblenddaten; und
Mischmittel (91, 92, 93, 94) zum individuellen Abgleichen von Wiedergabevideosignalpegeln und Grafikvideosignalpegeln gemäß den vom Speichermittel ausgegebenen Einblenddaten, und zum additiven Mischen der abgeglichenen Signale; **dadurch gekennzeichnet**, daß
das Grafikvideosignal eine Vielzahl von Leuchtschirmebenen aufweist und das Einblenddatengenerierungsmittel Einblenddaten erzeugt, die hinweisend sind für ein Mischverhältnis zwischen dem Wiedergabevideosignal und den einzelnen Leuchtschirmebenen des Grafiksignals gemäß einer vorgegebenen Reihenfolge,
das Speichermittel die Einblenddaten synchron mit einem horizontalen Synchronsignal (HSYNC) ausgibt; und das Gerät ferner umfaßt:
Datengenerierungsmittel (4, 12) zum Generieren, Pixel um Pixel, eines einer Vielzahl von Bilddaten entsprechend der Vielzahl von Leuchtschirmebenen des Grafikvideosignals gemäß einem Prioritätssignal, das eine Prioritätsreihenfolge bei der Reproduzierung der Leuchtschirmebenen darstellt, wobei das Datengenerierungsmittel ferner ein zusätzliches Datenbit für jedes der generierten Bilddaten zum Anzeigen vorsieht, zu welchem der Grafikvideosignalleuchtschirmebenen das generierte Bilddatum gehört;
Mittel (5) zum Umwandeln der Bilddaten, die vom Datengenerierungsmittel in das Grafikvideosignal ausgegeben werden; und
Beurteilungsmittel (7), die die vom Datengenerierungsmittel generierten Daten empfangen, zum Beurteilen auf der Grundlage des zusätzlichen Datenbits und der Bilddaten, zu welcher der Grafikvideosignalleuchtschirmebene die vom Datengenerierungsmittel ausgegebenen Bilddaten gehören,
wobei das Einblenddatengenerierungsmittel die Einblenddaten für die einzelnen Leuchtschirmebenen des Grafikvideosignals generiert, und das Speichermittel die Einblenddaten für jede Leuchtschirmebene des Grafikvideosignals abspeichert, und ein jedes der Vielzahl von abgespeicherten Einblenddaten gemäß dem Ergebnis der Unterscheidung durch das Beurteilungsmittel an das Mischmittel ausgegeben wird, oder jedes der Vielzahl der abgespeicherten Einblenddaten in die einzelnen Pegelabgleichmittel (912, 922, 923) eingegeben wird, die in dem Mischmittel vorgesehen sind, wobei das Grafikvideosignal gemäß den Ergebnissen der Unterscheidung durch das Beurteilungsmittel an eines der individuellen Pegelabgleichmittel gesendet wird.

2. Das Videomischgerät gemäß Anspruch 1, in der das Beurteilungsmittel die eine Leuchtschirmebene durch Auswertung der Bit-Anordnung der Bilddaten unterscheidet.

## Revendications

1. Appareil de mixage vidéo pour mixer un signal vidéo de reproduction obtenu d'un support d'enregistrement (10) et un signal graphique vidéo obtenu sur la base du résultat du traitement par les moyens de traitement des données (1, 4, 12), comprenant:
des moyens de génération de données d'évanouissement (1, 6) pour générer des données d'évanouissement indicatives d'un rapport de mixage entre au moins une ligne dudit signal vidéo de reproduction et dudit signal graphique vidéo ;
des moyens de retenue (64, 65, 66, 68) pour retenir les données d'évanouissement générées par lesdits moyens de génération des données d'évanouissement et pour restituer les données d'évanouissement ; et
des moyens de mixage (91, 92, 93, 94) pour régler individuellement les niveaux du signal vidéo de reproduction et du signal graphique vidéo selon les données d'évanouissement restituées par lesdits moyens de retenue et pour mixer en outre les signaux réglés ; **caractérisé en ce que** :
ledit signal graphique vidéo possède une pluralité d'écrans, et lesdits moyens de génération de données d'évanouissement génèrent des données d'évanouissement indicatives d'un rapport de mixage entre ledit signal vidéo de reproduction et chacun desdits écrans dudit signal graphique vidéo selon un ordre prédéterminé,
lesdits moyens de retenue restituent les données d'évanouissement de façon synchronisé avec un signal de synchronisation horizontal (HSYNC) ; et en ce que ledit appareil comprend en outre
des moyens de génération de données (4, 12) pour générer, pixel par pixel, une donnée image parmi une pluralité de données images correspondant à ladite pluralité d'écrans dudit signal graphique vidéo, selon un signal de priorité représentant un ordre de priorité dans la reproduction desdits écrans, lesdits moyens de génération des données fournissant en outre un bit de donnée additionnel pour chacune desdites données images générées pour indiquer auxquels desdits écrans vidéo graphique appartiennent les données images générées ;
des moyens (5) pour convertir les données images restituées par les moyens de génération de données en le signal graphique vidéo ; et
des moyens d'évaluations (7), recevant lesdites données images générées par lesdits moyens de génération de données, pour évaluer auquel des écrans de signaux vidéo graphique appartiennent les données images restituées par les moyens de génération, sur la base dudit bit de donnée additionnel et des données images,
dans lequel lesdits moyens de génération des données d'évanouissement génèrent les données d'évanouissement pour chacun desdits écrans dudit signal graphique vidéo, et lesdits moyens de retenue retiennent les données d'évanouissement pour chacun desdits écrans dudit signal graphique vidéo, et soit une des données d'évanouissement parmi la pluralité des données d'évanouissement retenues est restituée vers lesdits moyens de mixage, selon le résultat de la discrimination par lesdits moyens d'évaluation soit chacune de la pluralité de données d'évanouissement retenues est entrée dans les moyens de réglage individuel des niveaux (921, 922, 923) contenus dans lesdits moyens de mixage dans lesquels ledit signal graphique vidéo est fourni selon le résultat de la discrimination par lesdits moyens d'évaluation à un desdits moyens de réglage individuel des niveaux.

2. L'appareil de mixage vidéo selon la revendication 1,
dans lequel lesdits moyens d'évaluation discriminent ledit écran en évaluant la disposition des bits desdites données images.
